# EUROPÄISCHE PATENTSCHRIFT

(11) **EP 1 501 343 B1**
(45) Veröffentlichungstag und Bekanntmachung des Hinweises auf die Patenterteilung: **24.05.2006**
(21) Anmeldenummer: 03702176.3
(22) Anmeldetag: 10.01.2003
(51) Int. Cl.: A01G 1/12

(54) **VORRICHTUNG ZUM ENTFERNEN VON TAU VON GRASFL CHENBEWUCHS**
DEVICE FOR REMOVING DEW FROM GRASS SURFACE GROWTH
DISPOSITIF PERMETTANT DE SUPPRIMER LA ROSEE DE L'HERBE D'UNE PELOUSE

(30) Priorität: 07.05.2002 AT 7132002; 07.05.2002 AT 2902002
(43) Veröffentlichungstag der Anmeldung: 02.02.2005
(73) Patentinhaber: Johann Fimbinger GMBH, 8401 Kalsdorf/Feldkirchen (AT)
(72) Erfinder: FIMBINGER, Johann, A-8401 Kalsdorf/Feldkirchen (AT)
(74) Vertreter: Weiser, Andreas
(86) Internationale Anmeldenummer: PCT/AT2003/000008
(87) Internationale Veröffentlichungsnummer: WO 2003/094597

(56) Entgegenhaltungen:
- CA-A- 2 351 449
- GB-A- 446 508
- US-A- 2 694 880
- US-A- 2 718 730
- US-A- 3 954 499

## Beschreibung

Die Erfindung betrifft eine Vorrichtung zum Entfernen von Tau vom Bewuchs von Grasflächen, insbesondere Putting Greens von Golfplätzen, mit einer Betätigungseinrichtung. Die Schrift US-A-2 718 730 weist eine Vorrichtung zum Entfernen von Tau auf, mit mehreren quergespannten Ketten, die über den Rasen gezogen werden können.

Die in den Nacht- bzw. Morgenstunden auftretende Ablagerung von Tau stellt für empfindliche Grasflächen, wie Putting Greens mit extrem kurz geschnittenem Bewuchs, ein beträchtliches Problem dar. Werden die Tautropfen an den Enden der Grashalme nicht rechtzeitig vor Sonnenaufgang entfernt, wirken sie wie optische Linsen, welche die Sonnenstrahlen fokussieren und die oberen Enden der Grashalme versengen lassen. Die Folgen sind eine zumindest ungleichmäßige Veränderung des Bewuchses, wenn nicht sogar das Auftreten von braunen bzw. verbrannten Flecken in der Grasfläche.

Aus diesem Grund müssen empfindliche Grasflächen wie Putting Greens, deren Neuanlage überaus kostspielig wäre, täglich in der Früh von Tau befreit werden (sog. Abtauen). Dazu wird derzeit eine lange, dünne Fiberglasrute verwendet, die vom Greenkeeper über die Grasfläche gestrichen wird, um die Tautropfen vom Bewuchs abzuschütteln, so daß sie im Erdreich versickern können.

Dieses Verfahren ist ausgesprochen zeitraubend und überdies ineffizient, da die Rute nur unregelmäßig bewegt werden kann und daher das Abtauen nicht gleichmäßig erfolgt. Eine Anpassung der Rutenbewegung an Bodenunebenheiten, wie sie bei Putting Greens absichtlich vorgesehen werden ("Bombierung" des Greens), erfordert großes Geschick und erhöht die Gefahr einer ungleichmäßigen Behandlung. Ein häufiges Betreten der abzutauenden Grasfläche läßt sich außerdem nicht vermeiden.

Aufgabe der Erfindung ist es, die geschilderten Nachteile zu beheben und eine Vorrichtung zu schaffen, die ein rasches und gleichmäßiges Entfernen von Tau vom Bewuchs einer Grasfläche unter größtmöglicher Schonung ermöglicht, insbesondere auch bei unebenen Grasflächen.

Dieses Ziel wird mit einer neuartigen Vorrichtung zum Entfernen von Tau vom Bewuchs von Grasflächen, insbesondere Putting Greens von Golfplätzen, erreicht, die sich gemäß der Erfindung auszeichnet durch
eine Vielzahl von Rollen, die in zumindest zwei parallelen Reihen zu jeweils mehreren Rollen gruppiert sind, wobei die Längsachsen der Rollen einer Reihe fluchten,
eine Lageranordnung zur frei drehbaren Lagerung der Rollen in der genannten Gruppierung, und
die daran gelenkig angreifende Betätigungseinrichtung, mittels welcher die Vorrichtung unter Abrollen der Rollen auf dem Bewuchs über die Grasfläche schiebbar ist.

Auf diese Weise wird erstmals eine Vorrichtung geschaffen, mit welcher empfindlicher Grasflächenbewuchs schnell, schonend und gleichmäßig von Tau befreit werden kann. Die in parallelen Reihen frei drehbar angeordneten Rollen bilden eine Art Rollenteppich, der beim Schieben über die Grasfläche auf dem Bewuchs lediglich abrollt, anstelle zu gleiten, so daß der Bewuchs größtmöglich geschont wird, während gleichzeitig ein wirksames und gleichmäßiges Abschütteln der Tautropfen vom Bewuchs erzielt wird. Die Reihenanordnung der Rollen ermöglicht eine große Bearbeitungsbreite und damit ein rasches und gleichmäßiges Arbeiten. Die zum Schieben ausgebildete Betätigungseinrichtung gewährleistet, daß die Bedienungsperson (z.B. Greenkeeper) nur bereits behandelte Bereiche betritt, was ebenfalls zur Schonung des Bewuchses beiträgt. Der gelenkige Angriff der Betätigungseinrichtung stellt sicher, daß der Rollenteppich stets flach aufliegen kann. In praktischen Versuchen hat sich gezeigt, daß mit der erfindungsgemäßen Vorrichtung ein und dieselbe Grasfläche etwa vier- bis fünfmal schneller abgetaut werden kann als mit den bekannten Fiberglasruten.

Eine bevorzugte Ausführungsform der Erfindung zeichnet sich dadurch aus, daß die Lageranordnung für jede Reihe eine biegsame Achse aufweist, auf welche die Rollen mit seitlichem Abstand aufgefädelt sind. Dadurch wird ein in Querrichtung biegsamer Rollenteppich geschaffen, welcher sich Bodenunebenheiten der Grasfläche in Querrichtung optimal anpassen kann, so daß selbst bei unebenen Grasflächen eine gleichmäßige und schonende Behandlung erreicht wird.

Besonders vorteilhaft ist es dabei, wenn die Achsen aus elastischem Material gefertigt sind, was die Handhabung der Vorrichtung beim Transport, Aufsetzen und Abheben von der Grasfläche wesentlich erleichtert. Für eine hohe Lebensdauer sind die Achsen bevorzugt aus rostfreiem Federstahl gefertigt.

Gemäß einem weiteren bevorzugten Merkmal der Erfindung sind die Rollen benachbarter Reihen zueinander versetzt. Dadurch wird eine noch gleichmäßigere Behandlung erzielt.

In einer weiteren besonders vorteilhaften Ausführungsform sind zumindest drei parallele Reihen vorgesehen, die in einer gemeinsamen Ebene liegen, wobei die Lageranordnung ein Verschwenken zumindest einer der Reihen aus der gemeinsamen Ebene heraus gestattet. Zum einen kann dadurch eine größere Fläche des Rollenteppichs erzielt werden, wodurch sich das Auflagegewicht der Vorrichtung pro Flächeneinheit reduziert, was zur Schonung des Bewuchses beiträgt. Zum anderen wird dadurch ein auch in Längsrichtung (d.h. Schieberichtung) biegsamer Rollenteppich geschaffen, welcher sich auch Bodenunebenheiten der Grasfläche in Längsrichtung optimal anpassen kann, so daß selbst mit einer großflächigen Vorrichtung eine gleichmäßige und schonende Behandlung von unebenen Grasflächen erreicht werden kann.

Die Lageranordnung der Rollen kann an sich beliebiger Art sein, solange sie die genannte frei drehbare Reihengruppierung ermöglicht. Eine wegen ihrer einfachen und modularen Fertigungsmöglichkeit bevorzugte Variante besteht jedoch darin, daß bei Verwendung von Achsen, auf welche die Rollen aufgefädelt sind, die Lageranordnung einzelne Bügel umfaßt, die zwischen die Rollen greifen und die Achsen dort gelenkig lagern.

Die Anzahl, Länge und Anordnung der Bügel kann je nach Festigkeits- bzw. Biegsamkeitserfordernissen entsprechend gewählt werden. In einer ersten bevorzugten Ausführungsform verbinden die Bügel jeweils zwei benachbarte Achsen gelenkig miteinander, so daß jede Achse bezüglich der anderen parallel verschwenkbar ist. Dies eröffnet auch die Möglichkeit, die gesamte Vorrichtung zum Transport und zur Lagerung in der Art eines Teppichs eng zusammenzurollen. In einer alternativen Ausführungsform erstrecken sich die Bügel jeweils über mehr als zwei benachbarte Achsen, um nebeneinanderliegende Gruppen von Achsen gruppenweise gelenkig miteinander zu verbinden. Diese Variante benötigt weniger gesonderte Bügel, was den Fertigungs- und Montageaufwand reduziert, allerdings bei etwas geringerer Flexibilität des Rollenteppichs in Längsrichtung.

Eine weitere Möglichkeit zur Reduzierung des Fertigungs- und Montageaufwandes, ohne die Festigkeit und Haltbarkeit signifikant zu beeinträchtigen, besteht bevorzugt darin, daß in den Bereichen des Angriffs der Betätigungseinrichtung Bügel zwischen jeder Rolle und jeder Achse dieser Bereiche angeordnet sind, wogegen die Bügel in anderen Bereichen seltener gesetzt sind.

In jedem Fall ist es besonders günstig, wenn die Rollen aus wasserabweisendem Material, vorzugsweise Kunststoff, gefertigt sind. Dies verhindert ein Aufquellen der Rollen im Betrieb, verstärkt ihre Abtauwirkung und erleichtert überdies die Reinigung nach Gebrauch.

Bevorzugt sind die Rollen Hohlkörper, was das Gewicht der Vorrichtung reduziert und den Bewuchs noch besser schont. In der bevorzugten Ausführungsform von auf Achsen aufgefädelten Rollen wird vorteilhafterweise vorgesehen, daß jede Rolle mit einer zentralen Gleithülse ausgeformt ist, welche von der Achse durchsetzt ist, wobei die Gleithülse das Innere des Hohlkörpers zur Achse hin abdichtet. Dadurch wird ein Eindringen von Wasser über den Achseintrittsspalt in das Innere der Rolle wirksam verhindert.

Die Betätigungseinrichtung der Vorrichtung kann an sich beliebiger Art sein, solange sie ein flach aufliegendes Schieben des Rollenteppichs über den Bewuchs gestattet. Eine besonders einfache und gut handhabbare Ausführungsform besteht darin, daß die Betätigungseinrichtung zwei Schubstangen umfaßt, die mit seitlichem Abstand voneinander an der Lageranordnung gelenkig angreifen. Die voneinander gesonderten Schubstangen können mit je einer Hand ergriffen werden und ermöglichen eine ausgezeichnete Lenk- und Manövrierbarkeit der Vorrichtung beim Schieben.

Besonders günstig ist es, wenn die Schubstangen an der Lageranordnung einklappbar angelenkt sind. Auf diese Weise können sie zum Transport und zur Lagerung der Vorrichtung flach auf den Rollenteppich umgeklappt werden. Der Rollenteppich kann sogar um die umgeklappten Schubstangen herumgewickelt werden, so daß sich ein kompaktes, steifes Paket für den Transport und die Lagerung ergibt.

Alternativ oder zusätzlich können die Schubstangen mit Hilfe von Schnellkupplungen abnehmbar sein, beispielsweise zur Reinigung, zur Aufbewahrung oder zum Austausch.

Weitere Merkmale und Vorteile der Erfindung werden nachfolgend anhand von Ausführungsbeispielen unter Bezugnahme auf die Zeichnungen näher erläutert. In den Zeichnungen zeigen:
die Fig. 1 bis 4 eine erste Ausführungsform der Vorrichtung in der Draufsicht, der Vorderansicht, einer Seitenansicht und in einer Perspektivansicht;
Fig. 5 einen Detailausschnitt der Rollenreihen aus Fig. 1;
Fig. 6 einen Detailausschnitt der Schubstangenanlenkung aus Fig. 3;
Fig. 7 eine der Rollen der Vorrichtung der Fig. 1 bis 6 in einer perspektivischen, gesprengten Darstellung; und
Fig. 8 eine zweite Ausführungsform der Vorrichtung in der Draufsicht.

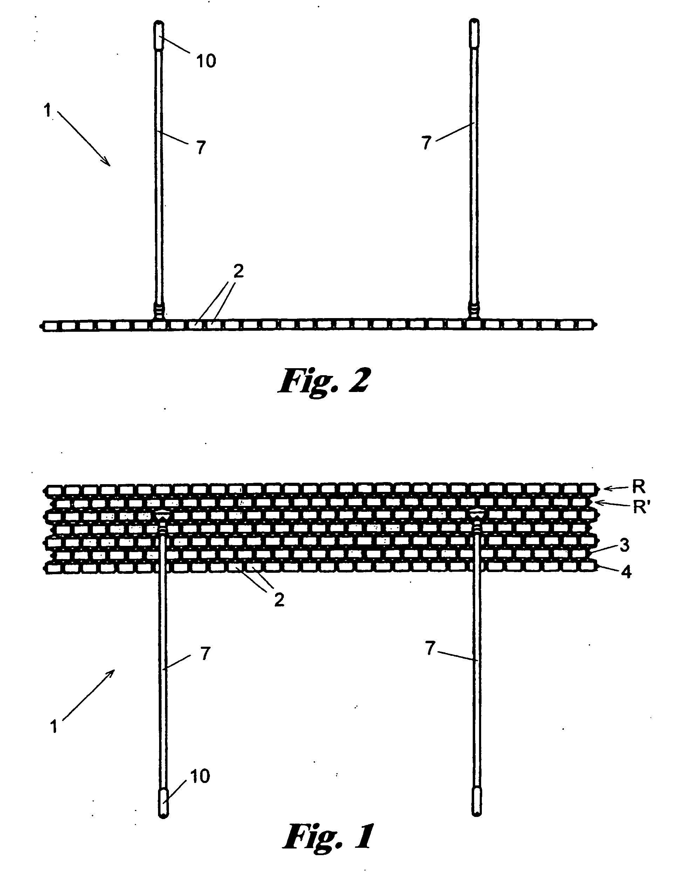

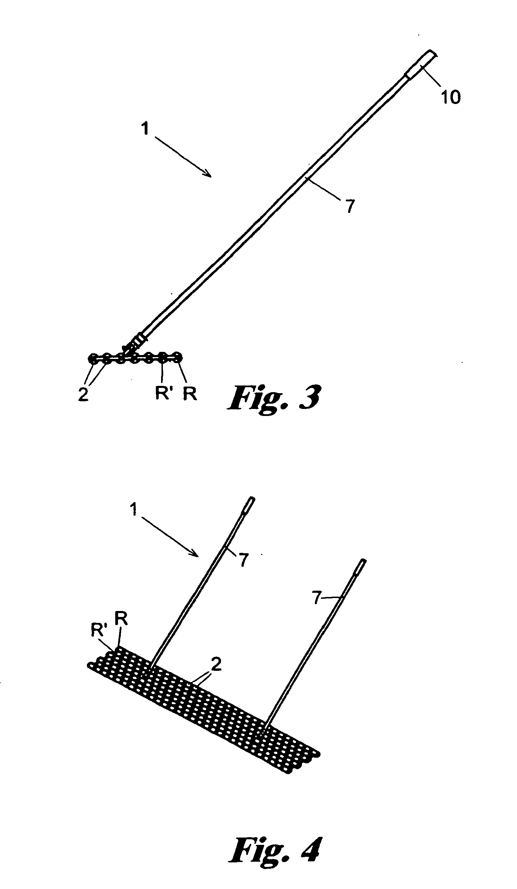

Die in den Fig. 1 bis 7 dargestellte Vorrichtung 1 weist mehrere, in einer Ebene parallel zueinander angeordnete lange Reihen R und dazwischenliegende kurze Reihen R' auf, wobei benachbarte Reihen R, R' jeweils unterschiedlich lang sind und die beiden äußersten Reihen R jeweils die größere Länge aufweisen.

Jede Reihe R, R' weist mehrere, mit seitlichem Abstand zueinander angeordnete längliche Rollen 2 auf, die auf eine dünne biegsame Achse 3 bzw. 4, bevorzugt aus elastischem Material, vorzugsweise rostfreiem Federstahl, frei drehbar aufgefädelt sind, wobei die Längsachsen der Rollen 2 mit den Achsen 3, 4 jeweils fluchten. Die Biegsamkeit der Achsen 3, 4 ermöglicht bei der Verwendung der Vorrichtung 1 eine Anpassung der Reihen R, R' in ihrer Längsrichtung an die Geländeform der abzutauenden Grasfläche.

Die Länge der langen Achse 3 ist wählbar und liegt im gezeigten Ausführungsbeispiel im Bereich von 2 m bis 2,5 m. Die maximal mögliche Länge der Achsen wird im wesentlichen durch das Gesamtgewicht der Vorrichtung 1 bestimmt, das noch eine angenehme und sichere Handhabung der Vorrichtung 1 ermöglicht.

Die Rollen 2 bestehen bevorzugt aus wasserabweisendem Material, beispielsweise Kunststoff, um ein Aufquellen der Rollen 2 zu vermeiden, und weisen vorzugsweise eine glatte Oberfläche auf. Die Abmessungen der Rollen 2 werden so gewählt, daß sie sich beim Schieben der Vorrichtung 1 über die abzutauende Grasfläche leichtgängig drehen. Im gezeigten Ausführungsbeispiel haben die Rollen 2 beispielsweise einen Durchmesser von 35 mm und eine Länge von 60 mm.

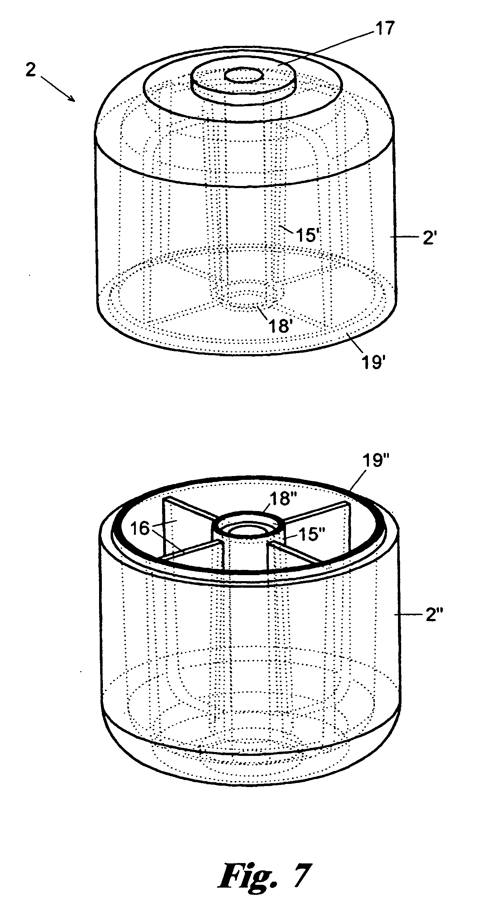

Die Rollen 2 können im Rahmen der Erfindung aus Vollmaterial bestehen oder im Inneren hohl mit entsprechenden Aussteifungsrippen ausgebildet sein. Fig. 7 zeigt ein Beispiel für letztere Variante. Die Rolle 2 ist hier mittels Spritzguß als Hohlkörper aus zwei Hälften 2', 2" gefertigt und mit einer (ebenso zweigeteilten) zentralen Gleithülse 15', 15" ausgeformt, durch welche die Achse 3 bzw. 4 hindurchtreten kann. Die Gleithülse 15', 15" ist über Versteifungsrippen 16 im Hohlkörperinneren der Rolle 2 zentriert.

Zur Verstärkung der Achslagerung sind die Enden der Gleithülse 15', 15" über die Stirnseiten der Rolle 2 vorgezogen, wie bei 17 dargestellt.

Die beiden Hälften 2', 2" werden mittels Ultraschall miteinander verschweißt. Die beim Schweißen aufeinanderliegenden ringförmigen Stirnflächen 18', 18" und 19', 19" sind komplementär gefalzt, um eine perfekte Abdichtung zu erzielen, so daß ein Eintritt von Wasser in das Hohlkörperinnere der Rolle 2 ausgeschlossen ist.

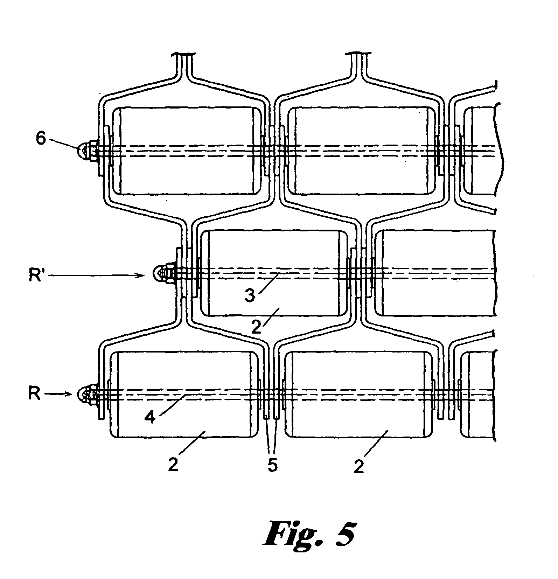

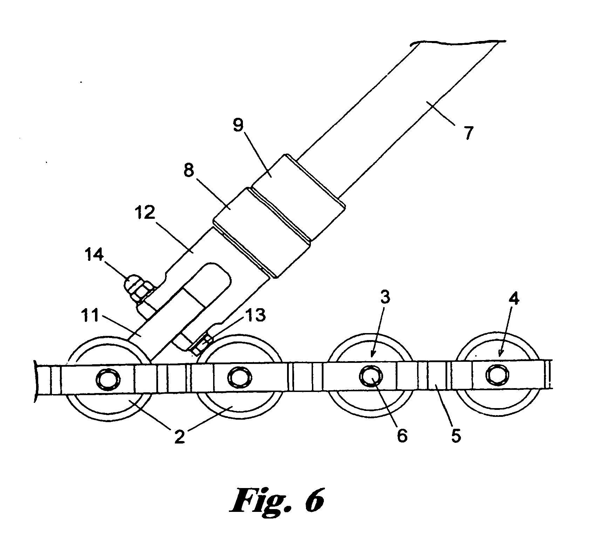

Die Rollen 2 liegen in einer Ebene, wobei die Rollen 2 einer Reihe R zu den Rollen 2 der benachbarten Reihe R' auf Lücke versetzt sind. Die Fig. 5 und 6 zeigen, daß benachbarte Reihen R, R' durch stufenförmig abgewinkelte Bügel 5 gelenkig miteinander verbunden sind. Die Enden der Bügel 5 sind drehbar um die Achsen 3, 4 gelagert und mit seitlichem Spiel zwischen den Rollen 2 sowie am äußeren Ende der jeweils äußersten Rolle 2 einer Reihe angeordnet. Die Bügel 5 bestehen vorzugsweise aus Kunststoff. Die Anzahl der Bügel 5 ist wählbar und wird im wesentlichen durch die Anforderungen an die Stabilität der Vorrichtung 1 bestimmt. Im Ausführungsbeispiel der Fig. 1 bis 7 ist die maximale Anzahl dargestellt, bei der jede Rolle 2 von Bügeln 5 umschlossen wird. Am Ende jeder Achse 3, 4 ist ein Gewinde zum Anbringen eine Abschlußverschraubung 6 vorgesehen, wie beispielsweise einer Hutmutter.

Es ist ersichtlich, daß die Achsen 3, 4, die Bügel 5 und die Abschlußverschraubung 6 gemeinsam eine Lageranordnung 3-6 für die Rollen 2 bilden. Es versteht sich, daß auch jede andere Art von Lageranordnung zur Lagerung der Rollen 2 verwendet werden könnte, solange sie die gezeigte reihenweise Gruppierung der Rollen in der Art eines Rollenteppichs ermöglicht. Beispielsweise könnten die Achsen 3, 4 entfallen, wenn die Rollen 2 selbst mit Achsstummeln ausgestattet werden, die z.B. in Lageröffnungen einer Halterung eingreifen, oder eine solche Halterung könnte mit Achszapfen ausgestattet werden, die in Stirnbohrungen der Rollen eingreifen, oder aber die Rollen 2 könnten mit Hilfe komplementärer Ausformungen direkt ineinander mit Hilfe komplementärer Ausformungen direkt ineinander eingreifen, usw.

Zum Schieben der Vorrichtung 1 über die abzutauende Grasfläche dient eine Betätigungseinrichtung 7-14, die nun im einzelnen erläutert wird.

Die Betätigungseinrichtung 7-14 umfaßt zwei lange Schubstangen 7, die von der Bedienungsperson mit jeweils einer Hand ergriffen werden können. Die Schubstangen 7 weisen an ihrem unteren Ende jeweils eine Schnellkupplung 8 und eine Gewindereduzierung 9 und an ihrem oberen Ende einen Griff 10 auf. Die beiden Schubstangen 7 werden an einer vorzugsweise im vorderen Drittel befindlichen Reihe R oder R' jeweils symmetrisch von der Mitte der Reihe aus mit einem gegenseitigen Abstand angeordnet, der es der Bedienungsperson ermöglicht, die Vorrichtung 1 leicht zu schieben und zu manövrieren.

Zum Anbringen der Schubstangen 7 an der Reihe R bzw. R' wird die an dieser Stelle an sich vorhandene Rolle 2 nicht eingesetzt, sondern durch einen flachen, trapezförmig ausgebildeten Halter 11 ersetzt, der frei drehbar an der Achse 3 bzw. 4 angelenkt ist und dessen Abmessungen im Bereich der Achse 3, 4 der Länge der ersetzten Rolle 2 entsprechen. Der Halter 11 wird an seinem oberen Ende von einem Gabelhalter 12 umschlossen, der mit Hilfe einer Verschraubung mit dem Halter 11 drehbar verbunden ist. Die Verschraubung besteht im gezeigten Ausführungsbeispiel aus einer Sechskantschraube 13 und einer Hutmutter 14. Der Gabelhalter 12 ist an seinem oberen Ende derart gestaltet, daß er in die Schnellkupplung 8 paßt. Die Schnellkupplung 8 erlaubt ein rasches Entfernen der Schubstangen 7, während die Gewindereduzierung 9 die Verwendung von Schubstangen in Standardausführung ermöglicht.

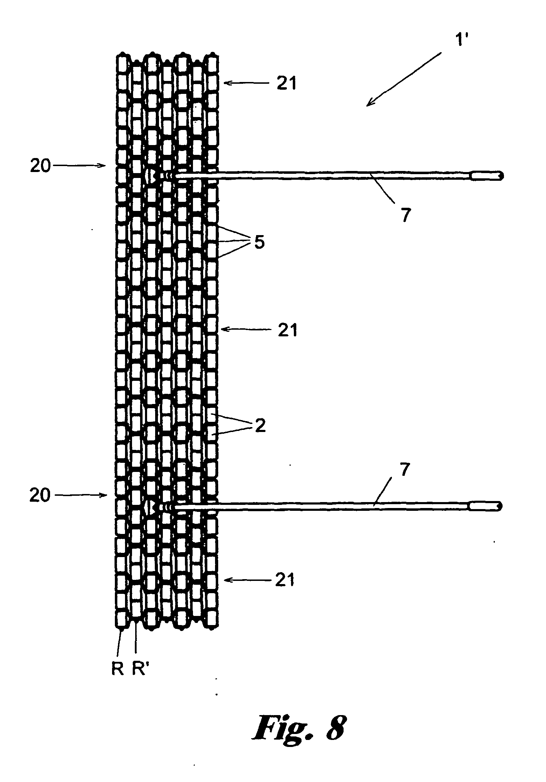

Fig. 8 zeigt eine alternative Ausführungsform der Vorrichtung 1'. Die Vorrichtung 1' ist gleich wie die Vorrichtung 1 aufgebaut, mit der Ausnahme, daß die Anzahl der erforderlichen Bügel 5 reduziert worden ist, ohne die Festigkeit der Vorrichtung signifikant zu beeinträchtigen. Dazu sind in den Bereichen 20 des Angriffs der Schubstangen 7 Bügel 5 zwischen jeder Rolle 2 und jeder Achse 3, 4 dieser Bereiche 20 angeordnet, wogegen die Bügel 5 in allen anderen Bereichen 21 seltener gesetzt sind, beispielsweise nur zwischen jeder zweiten Rolle 2.

Die Betriebsweise der Vorrichtung 1, 1' ist wie folgt.

Die Vorrichtung 1 wird zuerst möglichst außerhalb der abzutauenden Grasfläche ausgebreitet und die Schubstangen 7 werden in Arbeitsposition hochgeklappt, wobei die Bedienungsperson sich außerhalb der abzutauenden Grasfläche aufstellt. Die Bedienungsperson schiebt anschließend die Vorrichtung 1 streifenweise über die abzutauende Grasfläche und vor sich her und streift auf diese Weise den Tau vom Bewuchs der Grasfläche ab. Durch das Schieben der Vorrichtung 1 tritt die Bedienungsperson immer auf die bereits abgetaute Grasfläche. Durch die biegsamen, dünnen Achsen 3, 4 der Reihen R, R' paßt sich die Vorrichtung 1 etwaigen Unebenheiten der abzutauenden Grasfläche an, so daß alle Rollen 2 der Vorrichtung 1 gleichmäßig auf dem Bewuchs der Grasfläche aufliegen und immer unter gleichen Bedingungen arbeiten können. Nach Beendigung der Arbeit werden die einzelnen Reihen R, R' von Rollen 2 jeweils von außen zusammengerollt und die Schubstangen 7 eingeklappt, wobei das Zusammenrollen der Vorrichtung 1 durch die gelenkige Verbindung der Reihen R, R' ermöglicht wird. Durch das Zusammenrollen nimmt die Vorrichtung 1 nur wenig Platz ein und kann leicht transportiert werden. Vor dem Zusammenrollen wird die Vorrichtung 1 bei Bedarf mit Hilfe eines Wasserstrahls von anhaftendem Schmutz und Grashalmen gereinigt.

Es versteht sich, daß das dargestellte Ausführungsbeispiel im Rahmen des allgemeinen Erfindungsgedankens verschiedentlich abgewandelt werden kann, insbesondere hinsichtlich der Ausgestaltung und Abmessungen der Bügel. Beispielsweise ist es möglich, durch entsprechende Formgebung der Bügel mehrere Reihen gruppenweise zusammenzufassen, so daß z.B. jeweils drei benachbarte Reihen R, R' starr miteinander verbunden sind. Hierbei erstrecken sich die Bügel über die starr miteinander zu verbindende Reihen. Bei diesem Ausführungsbeispiel sind die Achsen 3, 4 der Reihen R, R' sowohl in den Enden als auch im Mittelteil der Bügel drehbar gelagert.

Im Rahmen der Erfindung ist es auch möglich, die Bügel gabelförmig auszugestalten, wobei die beiden Zinken der Gabel jeweils eine Rolle einschließen. In diesem Ausführungsbeispiel werden zum starren Verbinden von drei Reihen R, R' mehrere Bügel in Form einer Doppelgabel verwendet, wobei die Achsen 3, 4 sowohl in den Enden als auch im Mittelteil der Bügel drehbar gelagert sind.

Weiters können die Bügel im Rahmen der Erfindung aus mehreren Einzelteilen zusammengesetzt sein.

Ferner ist es im Rahmen der Erfindung möglich, die Ausgestaltung und die Abmessungen der Achsen und der Rollen an die Geländeform der abzutauenden Grasfläche anzupassen. Bei großen Unebenheiten der abzutauenden Grasflächen, z.B. bei starker Welligkeit der Grasfläche, sind kürzere, stärker elastisch biegsame Achsen mit kürzeren Rollen von Vorteil.

## Patentansprüche

1. Vorrichtung (1, 1') zum Entfernen von Tau vom Bewuchs von Grasflächen, insbesondere Putting Greens von Golfplätzen, mit einer Betätigungseinrichtung, **gekennzeichnet durch**
eine Vielzahl von Rollen (2), die in zumindest zwei parallelen Reihen (R, R') zu jeweils mehreren Rollen (2) gruppiert sind, wobei die Längsachsen der Rollen einer Reihe fluchten,
eine Lageranordnung (3-6) zur frei drehbaren Lagerung der Rollen (2) in der genannten Gruppierung, und
die daran gelenkig angreifende Betätigungseinrichtung (7-14), mittels welcher die Vorrichtung (1, 1') unter Abrollen der Rollen (2) auf dem Bewuchs über die Grasfläche schiebbar ist.

2. Vorrichtung nach Anspruch 1, **dadurch gekennzeichnet, daß** die Lageranordnung (3-6) für jede Reihe (R, R') eine biegsame Achse (3, 4) aufweist, auf welche die Rollen (2) mit seitlichem Abstand aufgefädelt sind.

3. Vorrichtung nach Anspruch 2, **dadurch gekennzeichnet, daß** die Achsen (3, 4) aus elastischem Material gefertigt sind, bevorzugt aus rostfreiem Federstahl.

4. Vorrichtung nach einem der Ansprüche 1 bis 3, **dadurch gekennzeichnet, daß** die Rollen (2) benachbarter Reihen (R, R') zueinander versetzt sind.

5. Vorrichtung nach einem der Ansprüche 1 bis 4, **dadurch gekennzeichnet, daß** zumindest drei parallele Reihen (R, R') vorgesehen sind, die in einer gemeinsamen Ebene liegen, wobei die Lageranordnung (3-6) ein Verschwenken zumindest einer der Reihen (R, R') aus der gemeinsamen Ebene heraus gestattet.

6. Vorrichtung nach einem der Ansprüche 2 bis 5, **dadurch gekennzeichnet, daß** die Lageranordnung (3-6) einzelne Bügel (5) umfaßt, welche zwischen die Rollen (2) greifen und die Achsen (3, 4) dort gelenkig lagern.

7. Vorrichtung nach Anspruch 6, **dadurch gekennzeichnet, daß** die Bügel (5) jeweils zwei benachbarte Achsen (3, 4) gelenkig miteinander verbinden.

8. Vorrichtung nach Anspruch 6, **dadurch gekennzeichnet, daß** sich die Bügel (5) jeweils über mehr als zwei benachbarte Achsen (3, 4) erstrecken, um nebeneinanderliegende Gruppen von Achsen (3, 4) gruppenweise gelenkig miteinander zu verbinden.

9. Vorrichtung nach einem der Ansprüche 6 bis 8, **dadurch gekennzeichnet, daß** in den Bereichen (20) des Angriffs der Betätigungseinrichtung (7-14) Bügel (5) zwischen jeder Rolle (2) und jeder Achse (3, 4) dieser Bereiche (20) angeordnet sind, wogegen die Bügel (5) in anderen Bereichen (21) seltener gesetzt sind.

10. Vorrichtung nach einem der Ansprüche 1 bis 9, **dadurch gekennzeichnet, daß** die Rollen (2) aus wasserabweisendem Material, vorzugsweise Kunststoff, gefertigt sind.

11. Vorrichtung nach einem der Ansprüche 1 bis 10, **dadurch gekennzeichnet, daß** die Rollen (2) Hohlkörper sind.

12. Vorrichtung nach den Ansprüchen 2 und 11, **dadurch gekennzeichnet, daß** jede Rolle (2) mit einer zentralen Gleithülse (15', 15") ausgeformt ist, welche von der Achse (3, 4) durchsetzt ist, wobei die Gleithülse (15', 15") das Innere des Hohlkörpers zur Achse (3, 4) hin abdichtet.

13. Vorrichtung nach einem der Ansprüche 1 bis 12, **dadurch gekennzeichnet, daß** die Betätigungseinrichtung (7-14) zwei Schubstangen (7) umfaßt, die mit seitlichem Abstand voneinander an der Lageranordnung (3-6) gelenkig angreifen.

14. Vorrichtung nach Anspruch 13, **dadurch gekennzeichnet, daß** die Schubstangen (7) an der Lageranordnung (3-6) einklappbar angelenkt sind.

15. Vorrichtung nach Anspruch 13 oder 14, **dadurch gekennzeichnet, daß** die Schubstangen (7) mit Hilfe von Schnellkupplungen (8) abnehmbar sind.

## Claims

1. A device (1, 1') for removing dew from the vegetation on grassed surfaces, in particular golf course greens, having an actuating means,
**characterised by**
a large number of rollers (2), which are grouped together in at least two parallel rows (R, R') each comprising a plurality of rollers (2), the longitudinal axes of the rollers in any one row being aligned,
a bearing arrangement (3-6) for freely rotatable mounting of the rollers (2) in the stated grouping, and
the actuating means (7-14) attached in articulated manner thereto, by means of which the device (1, 1') may be pushed over the grassed surface by rolling the rollers (2) over the vegetation.

2. A device according to claim 1, **characterised in that** the bearing arrangement (3-6) for each row (R, R') comprises a flexible shaft (3, 4), onto which the rollers (2) are threaded with lateral spacing.

3. A device according to claim 2, **characterised in that** the shafts (3, 4) are made of resilient material, preferably of stainless spring steel.

4. A device according to any one of claims 1 to 3, **characterised in that** the rollers (2) of adjoining rows (R, R') are staggered relative to one another.

5. A device according to any one of claims 1 to 4, **characterised in that** at least three parallel rows (R, R') are provided, which lie in a common plane, wherein the bearing arrangement (3-6) allows swivelling of at least one of the rows (R, R') out of the common plane.

6. A device according to any one of claims 2 to 5, **characterised in that** the bearing arrangement (3-6) comprises individual brackets (5), which engage between the rollers (2) and provide articulated mounting of the shafts (3, 4) at these points.

7. A device according to claim 6, **characterised in that** the brackets (5) each connect two adjoining shafts (3, 4) to one another in articulated manner.

8. A device according to claim 6, **characterised in that** the brackets (5) each extend over more than two adjoining shafts (3, 4), in order to connect groups of shafts (3, 4) located next to one another together so as to provide group-wise articulation.

9. A device according to any one of claims 6 to 8, **characterised in that**, in the areas (20) to which the actuating means (7-14) is attached, brackets (5) are arranged between each roller (2) and each shaft (3, 4) of these areas (20), whereas the brackets (5) in other areas (21) are provided less frequently.

10. A device according to any one of claims 1 to 9, **characterised in that** the rollers (2) are made of water-repellent material, preferably plastics.

11. A device according to any one of claims 1 to 10, **characterised in that** the rollers (2) are hollow bodies.

12. A device according to claims 2 and 11, **characterised in that** each roller (2) is shaped with a central sliding sleeve (15', 15"), through which the shaft (3, 4) passes, wherein the sliding sleeve (15', 15") seals the inside of the hollow body relative to the shaft (3, 4).

13. A device according to any one of claims 1 to 12, **characterised in that** the actuating means (7-14) comprises two pusher rods (7), which are spaced laterally from one another and are attached in articulated manner to the bearing arrangement (3-6).

14. A device according to claim 13, **characterised in that** the pusher rods (7) are coupled in foldable manner to the bearing arrangement (3-6).

15. A device according to claim 13 or claim 14, **characterised in that** the pusher rods (7) may be removed by means of quick couplings (8).

## Revendications

1. Dispositif (1, 1') pour enlever la rosée de l'herbe de gazons, en particulier des putting greens des terrains de golf, comportant un système d'actionnement,
**caractérisé par**
une pluralité de rouleaux (2) qui sont groupés en au moins deux rangées (R, R') parallèles ayant respectivement plusieurs rouleaux (2), dans laquelle les axes longitudinaux des rouleaux d'une rangée se trouvent en alignement,
un agencement de paliers (3-6) pour le tourillonnement à libre rotation des rouleaux (2) dans le groupement cité, et
le système d'actionnement à attaque articulée (7-14), au moyen duquel le dispositif (1, 1') peut être poussé en faisant rouler les rouleaux (2) sur l'herbe du gazon.

2. Dispositif selon la revendication 1, **caractérisé en ce que** l'agencement de paliers (3-6) pour chaque rangée (R, R') présente un axe flexible (3, 4) sur lequel les rouleaux (2) sont enfilés avec un espacement latéral entre eux.

3. Dispositif selon la revendication 2, **caractérisé en ce que** les axes (3, 4) sont fabriqués à partir de matériau élastique, de préférence à partir d'acier à ressort inoxydable.

4. Dispositif selon l'une des revendications 1 à 3, **caractérisé en ce que** les rouleaux (2) de rangées adjacentes (R, R') sont décalés entre eux.

5. Dispositif selon l'une des revendications 1 à 4, **caractérisé en ce qu'**il est prévu au moins trois rangées (R, R') parallèles qui se situent dans un plan commun, l'agencement de paliers (3, 6) permettant un basculement d'au moins une des rangées (R, R') hors du plan commun.

6. Dispositif selon l'une des revendications 2 à 5, **caractérisé en ce que** l'agencement des paliers (3-6) comprend des étriers individuels (5) qui s'engagent entre les rouleaux (2) et y reçoivent les axes (3, 4) de façon articulée.

7. Dispositif selon la revendication 6, **caractérisé en ce que** les étriers (5) raccordent respectivement l'un à l'autre deux axes (3, 4) adjacents de façon articulée.

8. Dispositif selon la revendication 6, **caractérisé en ce que** les étriers (5) s'étendent respectivement sur plus de deux axes (3, 4) adjacents afin de raccorder entre eux, de façon articulée et par groupe, des groupes juxtaposés d'axes (3, 4).

9. Dispositif selon l'une des revendications 6 à 8, **caractérisé en ce que**, dans les zones (20) de l'engagement du système d'actionnement (7-14), des étriers (5) sont disposés entre chaque rouleau (2) et chaque axe (3, 4) de ces zones (20), tandis que les étriers (5) sont disposés de façon moins dense dans d'autres zones (21).

10. Dispositif selon l'une des revendications 1 à 9, **caractérisé en ce que** les rouleaux (2) sont fabriqués à partir d'un matériau hydrophobe, de préférence un matériau synthétique.

11. Dispositif selon l'une des revendications 1 à 10, **caractérisé en ce que** les rouleaux (2) sont des corps creux.

12. Dispositif selon les revendications 2 et 11, **caractérisé en ce que** chaque rouleau (2) est formé avec une douille de coulissement centrale (15', 15") qui est traversée par l'axe (3, 4), la douille de coulissement (15, 15") assurant l'étanchéité de l'intérieur du corps creux par rapport à l'axe (3, 4).

13. Dispositif selon l'une des revendications 1 à 12, **caractérisé en ce que** le système d'actionnement (7-14) comprend deux tiges de poussée (7) qui s'engagent de façon articulée avec un espacement latéral entre elles sur l'agencement de paliers (3-6).

14. Dispositif selon la revendication 13, **caractérisé en ce que** les tiges de poussée (7) sont articulées de façon encliquetable sur l'agencement de paliers (3-6).

15. Dispositif selon la revendication 13 ou 14, **caractérisé en ce que** les tiges de poussée (7) peuvent être enlevées au moyen d'attaches rapides (8).
